(19) Europäisches Patentamt

European Patent Office

Office européen des brevets

(11) **EP 0 750 977 B1**

(12) **FASCICULE DE BREVET EUROPEEN**

(45) Date de publication et mention
de la délivrance du brevet:
**29.05.2002 Bulletin 2002/22**

(51) Int Cl.⁷: **B29C 47/08**, B29C 47/22

(21) Numéro de dépôt: **96109808.4**

(22) Date de dépôt: **19.06.1996**

(54) **Dispositif d'étanchéité, notamment pour machine de transformation de matière plastique**

Dichtungseinrichtung, insbesondere für Kunststoffverarbeitungsmaschine

Sealing device, particularly for a plastic processing machine

(84) Etats contractants désignés:
**AT CH DE FI IT LI**

(30) Priorité: **29.06.1995 FR 9507845**

(43) Date de publication de la demande:
**02.01.1997 Bulletin 1997/01**

(73) Titulaire: **Swisscab S.A.**
**1462 Yvonand (CH)**

(72) Inventeur: **Buluschek, Bruno**
**1026 Echandens (CH)**

(74) Mandataire: **Patry, Didier Marcel Pierre et al**
**I C B,**
**Ingénieurs Conseils en Brevets S.A.**
**Rue des Sors 7**
**2074 Marin (CH)**

(56) Documents cités:
**WO-A-87/05238**        **AT-A- 320 265**
**DE-A- 2 153 962**       **US-A- 3 222 721**

## Description

L'invention concerne un dispositif d'étanchéité, notamment pour machine de transformation de matière plastique.

Plus particulièrement, l'invention concerne un dispositif permettant d'assurer l'étanchéité entre deux éléments mécaniques destinés à véhiculer un écoulement de matière plastique en fusion sous une forte pression.

Un exemple typique où des problèmes d'étanchéité se posent dans ce domaine de la technique, est celui des filières d'extrusion dans lesquelles la température de la matière plastique en fusion peut monter à 500°C ou davantage sous une pression qui peut parfois atteindre 1000 bars.

Dans de telles conditions de fonctionnement et en particulier en raison de la température élevée de la matière plastique, l'étanchéité ne peut pas être assurée par des garnitures en caoutchouc ou en matière synthétique.

Pour ces cas, on a donc habituellement recours à des dispositifs d'étanchéité dans lesquels on utilise des éléments métalliques qui pour être étanches l'un vis-à-vis de l'autre sont pourvus de surfaces très soigneusement rectifiées avec des tolérances très serrées. Ces éléments sont alors pressés fortement l'un contre l'autre pour rendre impossible le passage de la matière plastique vers l'extérieur du passage d'écoulement.

On connaît par ailleurs par le document DE-A-21 53 962 un dispositif d'étanchéité pour assurer la jonction étanche entre une première et une seconde canalisations destinées à véhiculer un fluide tel que de la matière plastique en fusion. Ce dispositif d'étanchéité comprend une bague d'étanchéité cylindrique présentant à l'une de ses extrémités un rebord tronconique incliné dans le sens d'écoulement de la matière afin de ne pas créer d'obstacle susceptible de gêner cet écoulement. Le rebord tronconique présente une surface extérieure cylindrique qui est en appui contre la surface intérieure de la première canalisation sous une précontrainte due aux tolérances dimensionnelles de la surface extérieure dudit rebord et de la surface intérieure de la première canalisation.

De telles conditions d'étanchéité présentent l'inconvénient de nécessiter une fabrication des éléments à assembler avec une très grande précision et de former ensuite un ensemble rigide qui n'autorise aucun réglage ou ajustement des deux éléments l'un par rapport à l'autre.

L'invention a donc pour but principal de fournir un dispositif d'étanchéité, notamment pour machine de transformation de matière plastique, pouvant être fabriqué avec des tolérances relativement larges et permettant dans une certaine mesure un déplacement des éléments l'un par rapport à l'autre pour assurer certains réglages ou ajustements.

A cet effet, l'invention a donc pour objet un dispositif d'étanchéité pour assurer la jonction étanche entre deux canalisations destinées à véhiculer un fluide, notamment un écoulement de matière plastique à haute température et sous forte pression, ce dispositif comprenant une première pièce de forme générale cylindrique et définissant au moins en partie la première canalisation et une seconde pièce également de forme générale cylindrique et définissant au moins en partie la seconde canalisation, ladite seconde pièce étant insérée dans ladite première canalisation, caractérisé en ce que ladite seconde pièce comporte, à au moins l'une de ces extrémités, une lèvre annulaire dépassant de sa surface cylindrique extérieure et raccordée à cette extrémité par une zone amincie annulaire, ladite lèvre présentant une surface extérieure cylindrique qui est en appui contre la surface intérieure de ladite première pièce sous une précontrainte due aux tolérances dimensionnelles de ladite surface extérieure de ladite lèvre et ladite surface intérieure de ladite première pièce cylindrique.

Grâce à ces caractéristiques, on obtient une étanchéité parfaite au niveau de la jonction entre les deux canalisations et d'autant plus efficace que la pression de la matière plastique sera élevée.

D'autres caractéristiques et avantages de l'invention apparaîtront au cours de la description qui va suivre, donnée uniquement à titre d'exemple et faite en se référant aux dessins annexés sur lesquels :

- la figure 1 est une vue en coupe schématique d'une partie d'une tête d'extrusion destinée à revêtir un fil de matière plastique et incorporant les caractéristiques de la présente invention;
- la figure 2 montre à une échelle agrandie comment se répartit la pression sur le profil de la partie formant joint du dispositif d'étanchéité selon l'invention;
- la figure 3 est une vue en coupe schématique d'une partie d'une tête d'extrusion munie d'un dispositif d'étanchéité selon l'invention autorisant un réglage de la coaxialité de la filière;
- la figure 4 est une vue en coupe schématique d'une partie d'une tête d'extrusion munie d'un dispositif d'étanchéité selon l'invention réalisé sur une pièce formant porte-filière;
- la figure 5 illustre, par une vue en coupe schématique comment dans une tête d'extrusion, le dispositif d'étanchéité selon l'invention peut être utilisé avec une plaque de répartition de la matière plastique; et
- la figure 6 montre une autre application du dispositif d'étanchéité selon l'invention à la connexion étanche de deux brides de jonction entre des canalisations véhiculant une matière plastique à température et pression élevées.

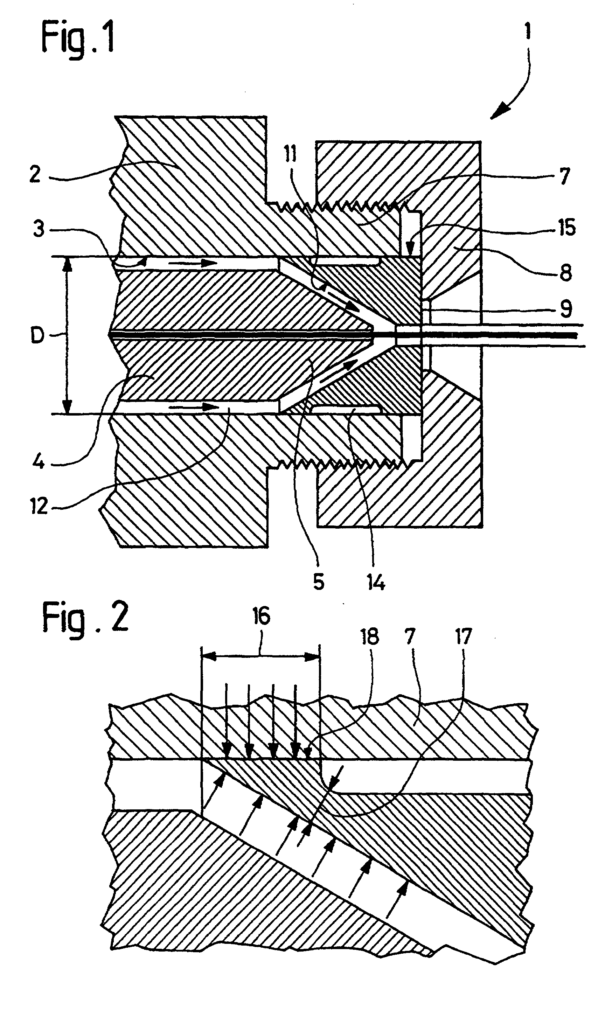

La figure 1 montre un premier exemple d'application du dispositif d'étanchéité selon l'invention à une tête d'extrusion 1 de matière plastique dont seule une partie a été représentée au dessin. Pour des raisons de commodité nous désignerons cette partie par "tête d'extrusion" dans la suite de la description. Le corps 2 de cette tête d'extrusion présente un passage 3 de section cylindrique, à travers lequel la matière plastique en fusion est amenée sous haute pression. Dans le présent exemple, un guide-fil 4 se terminant par une partie conique 5 est placé coaxialement dans la canalisation 3. Il est traversé par un fil métallique 6 qu'il s'agit de revêtir de matière plastique. Par exemple, il peut s'agir d'un fil de cuivre qui doit être gainé d'un isolant.

Le corps 2 de la tête d'extrusion 1 comprend un embout 7 fileté extérieurement et sur lequel est vissé un écrou 8. Ce dernier sert à maintenir en place une filière 9 placée dans la canalisation 3 du corps 2 et sur lequel est matérialisé le dispositif d'étanchéité selon l'invention.

La filière 9 présente une forme générale cylindrique et définit un passage central 10 comportant une partie conique 11 de même conicité que celle du guide-fil 4. Ce dernier est placé dans la canalisation 9 de manière à y définir un canal d'écoulement 12 de la matière plastique sur lequel se raccorde l'orifice calibré 13 de la filière 9.

L'enveloppe de la surface extérieure de la filière 9 est cylindrique. Cette surface extérieure présente une rainure annulaire 14 dont la dimension axiale (autrement dit sa largeur) s'étend sur une partie significative de la dimension axiale totale de la filière de manière que celle-ci soit dégagée dans cette zone de la surface intérieure du corps 2. Ainsi, cette rainure 13 définit, d'une part en aval par rapport à l'écoulement de matière plastique, une portée extérieure 15 débordant légèrement de l'embout 7 du corps 2 et, d'autre part en amont, une lèvre 16 qui constitue l'élément principal du dispositif d'étanchéité selon l'invention.

Le profil de la lèvre 16 apparaît à une échelle agrandie sur la figure 2. On voit que, dans le présent exemple, elle a en section radiale une forme triangulaire raccordée au corps de la filière 9 par une zone annulaire de raccordement 17 généralement amincie et destinée à se déformer dans la limite de sa déformation élastique lors de la mise en place de la filière dans la canalisation 3 et également pendant que la matière plastique s'écoule dans le canal d'écoulement 12. La lèvre elle-même présente extérieurement une surface cylindrique 18 dont le diamètre est légèrement supérieur à celui du corps de la filière.

A titre indicatif seulement, si selon la norme usuelle ISO/VSM 58400, on exécute le diamètre du passage 3 du corps 2 de la tête d'extrusion avec la tolérance H6, la surface enveloppe cylindrique de la filière 9 aura le même diamètre exécuté avec la tolérance k6, 16 ou m6 selon la matière utilisée pour la filière. Celle-ci sera donc dure à monter dans la canalisation du corps, mais elle n'aura pas à y être chassée. Quant à la portée 15, elle a un diamètre ajusté à celui du passage 3 avec une tolérance relativement large.

De la sorte, et vu son raccordement au corps de la filière par l'intermédiaire de la zone amincie 17, l'ensemble se déformera légèrement lors de son insertion dans la canalisation 3 et subira une précontrainte qui appliquera fermement la surface 18 de la lèvre 16 contre la surface intérieure du passage 3. On remarquera que la pression de contact entre les deux surfaces sera d'autant plus grande que la pression de la matière plastique s'écoulant dans le canal 12 sera plus grande. Par conséquent, la qualité de l'étanchéité sera toujours garantie.

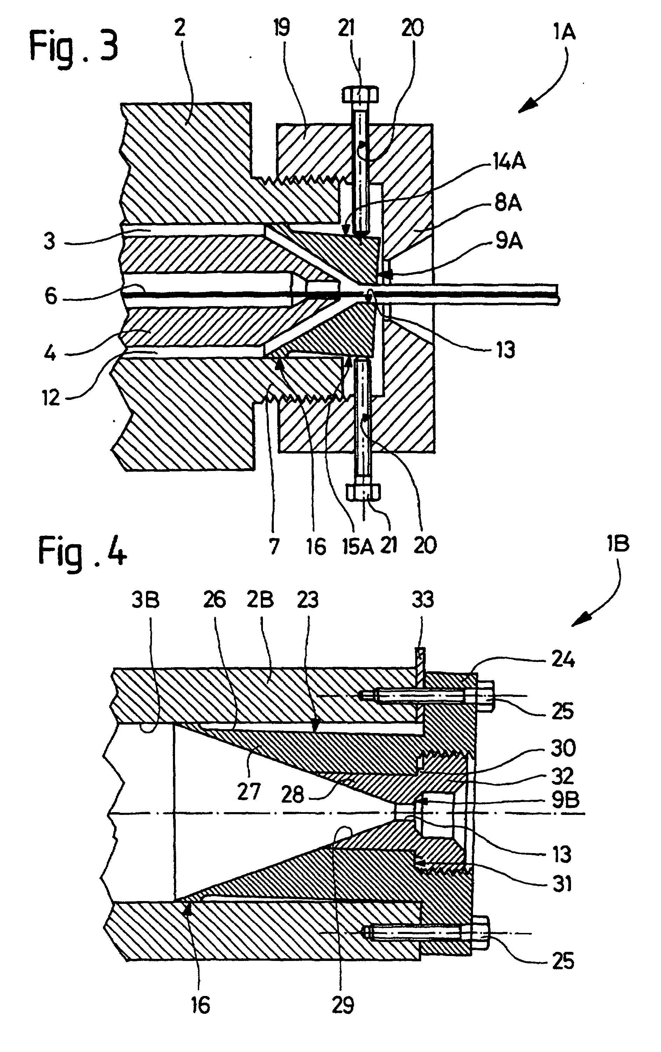

La figure 3 représente une vue en coupe axiale d'une partie 1A d'une tête d'extrusion (qui sera désignée par la suite "tête d'extrusion 1A") dans laquelle est incorporée une caractéristique particulièrement avantageuse de l'invention.

Cette tête d'extrusion comporte un corps 2 et un guide-fil 4 identique à ceux prévus dans la tête d'extrusion représentée sur la figure 1.

En revanche, cette tête d'extrusion 1A comporte une filière 9A dont la forme est légèrement différente de celle de la filière 9 représentée à la figure 1. En effet, sa surface extérieure ne présente, outre la lèvre annulaire 16, aucune autre aspérité, mais au contraire une surface cylindrique 15A de diamètre constant et légèrement inférieur à celui du passage 3 du corps de la tête d'extrusion 1A.

En outre, celle-ci comporte un écrou 8A servant non seulement à l'immobilisation de la filière 9A dans la canalisation 3, mais également au réglage radial de celle-ci.

Plus précisément, la jupe cylindrique 19 de cet écrou 8A présente deux trous filetés radiaux 20, de préférence alignés l'un sur l'autre. Ces trous sont destinés à recevoir des vis de réglage 21.

Comme représenté de façon exagérée sur la figure 3, cet agencement permet d'incliner l'axe de la filière 9A par rapport à celui du passage 3 et donc du guide-fil 1 en agissant sur les vis de réglage 21. Cette inclinaison va de pair avec une déformation asymétrique de la lèvre 16 de la filière 9A dont la zone de raccordement 17 se déforme légèrement. On peut donc ajuster la coaxialité de l'orifice calibré 13 de la filière 9A et du fil 6 à revêtir de matière plastique dont on peut ainsi assurer une épaisseur de revêtement uniforme autour de ce fil. Des essais ont montré que l'on peut obtenir ainsi une inclinaison relative des axes du passage 3 et de la filière 9A pouvant aller jusqu'à 3°, ce qui est largement suffisant pour obtenir en toute circonstance une bonne coaxialité entre le fil 6 et son revêtement isolant. Cette inclinaison ne nuit nullement à une bonne étanchéité du niveau de la lèvre 16 dont la surface 17 reste toujours fermement appliquée contre la surface du passage 3. En outre, les vis 21 autorisent un réglage fin de l'inclinaison. Enfin, l'ensemble évite toute stagnation de la matière plastique dans le canal d'écoulement et l'orifice calibré de la filière.

A titre d'exemple uniquement, on obtient des résultats satisfaisants si

$$1/5 \leq s/D \leq 1/100$$

et

$$1/25 \leq d/D \leq 1/500$$

dans lesquelles :

s = longueur axiale de la surface 18,
D = diamètre de la canalisation 3;
d = épaisseur de la zone amincie 17.

et en utilisant un acier de nitruration à la limite d'élasticité élevée, durci à 1000 HV:

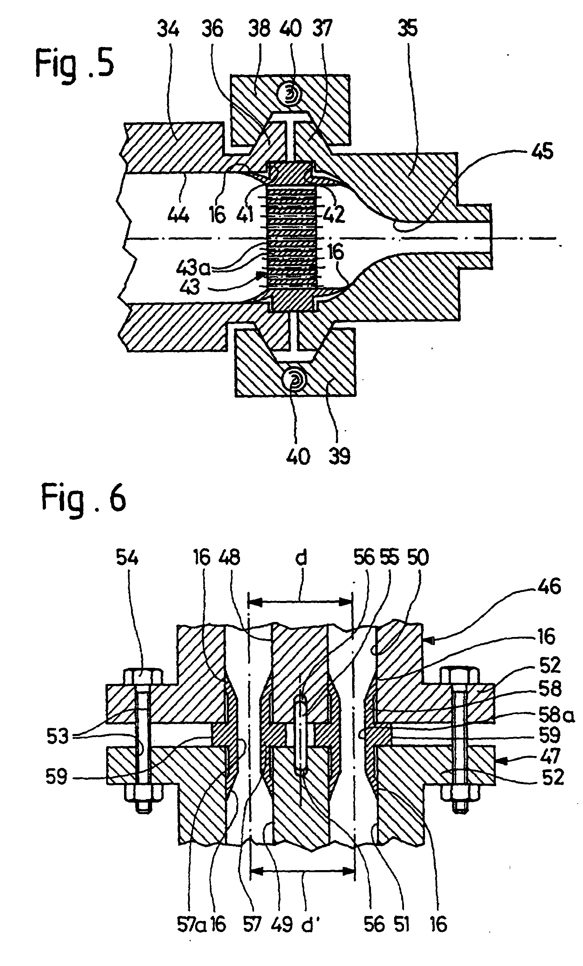

La partie 1B de la tête d'extrusion (qui sera désignée dans la suite par "tête d'extrusion" 1B) selon le modèle de réalisation de la figure 4 comporte un corps 2B formé d'une simple pièce tubulaire. Dans la canalisation cylindrique 3B de ce corps 2B est insérée un porte-filière 23 servant de pièce intermédiaire de montage d'une filière 9B proprement dite.

Le porte-filière 23 est une pièce tubulaire sur l'une des extrémités de laquelle est ménagée la lèvre annulaire 16 du dispositif d'étanchéité selon l'invention. A son autre extrémité, le porte-filière 23 est muni d'une bride de fixation 24 au moyen de laquelle il est fixé sur le corps 2B à l'aide de vis 25 orientées axialement. Entre la lèvre annulaire 16 et la bride 24, ce porte-filière présente une surface extérieure 26 de diamètre uniforme nettement inférieur à celui du passage 3B du corps 2B.

Intérieurement, le porte-filière 23 présente un alésage dont la partie arrière 27 est conique et prolonge la surface intérieure de la lèvre 16. Sur cette partie conique 27 se raccorde à l'avant une partie cylindrique droite 28 destinée à recevoir la filière 9B.

Celle-ci présente un alésage intérieur avec une partie arrière conique 29 se raccordant à son tour sur la partie conique 27 du porte-filière 23. La partie avant de cet alésage constitue l'orifice calibré 13 de la tête d'extrusion. En outre, la filière présente à l'avant une collerette d'appui 30 destinée à venir s'appliquer contre un épaulement radial 31 ménagé dans le porte-filière 23 à hauteur de la bride 24. Celle-ci est filetée intérieurement et reçoit un écrou de fixation 32 immobilisant la filière 9B dans le porte-filière 23.

Comme dans le mode de réalisation de la figure 3, l'axe de la filière 9B peut être incliné par rapport à celui du passage 3B en interposant une cale 33 entre la bride 24 et le corps 2B à un endroit déterminé de la périphérie de cette bride.

Le dispositif d'étanchéité selon l'invention selon le mode de réalisation de la figure 5 est utilisé à la jonction de deux pièces mécaniques tubulaires 34 et 35 destinées à véhiculer un écoulement de matière plastique d'un tuyau d'une section donnée à un tuyau de section égale ou plus faible.

Ces pièces 34 et 35 sont pourvues de chacune d'une bride de jonction 36, 37 à face tronconique de serrage avec lesquelles coopèrent deux demi-colliers de serrage 38 et 39 entourant ensemble les deux pièces 34 et 35. Ces demi-colliers sont fixés l'un à l'autre par des vis de fixation s'étendant parallèlement dans un plan radial de l'ensemble et traversant des trous 40 qui y sont prévus à cet effet.

Chacune des brides présente en outre un épaulement radial 41, 42 contre lequel vient s'appuyer une plaque à orifices 43 rendre uniforme le profil d'écoulement de la matière plastique en aval de la pièce 35. Cette plaque constitue donc par ses orifices 43a une seconde canalisation formée par chacun des passages définis respectivement par les pièces 34 et 35.

La plaque à orifices 43 est ainsi insérée dans chacune des premières canalisations 44 et 45 et comporte deux lèvres annulaires 16 s'étendant respectivement axialement à partir de ses faces radiales et appuyées contre les surfaces intérieures respectives des canalisations 44 et 45 des pièces 34 et 35. Ce sont ces lèvres qui assurent l'étanchéité de la jonction et ce avec d'autant plus d'efficacité que la pression de la matière plastique dans les canalisations est plus élevée. D'ailleurs, cette pression assure également l'appui des brides 36 et 37 contre les demi-colliers de serrage 38 et 39.

La figure 6 montre une autre application du dispositif d'étanchéité selon l'invention dans laquelle il s'agit d'assurer l'étanchéité entre deux pièces de connexion 46 et 47 formant une jonction dans deux tuyaux parallèles et pouvant véhiculer de la matière plastique à haute température et sous une forte pression.

Les pièces de connexion 46 et 47 définissent chacune des premières canalisations parallèles, resp. 48, 49 et 50, 51 et comportent chacune une bride de fixation 52 munies de trous 53 pour le passage de vis de serrage 54. Dans l'axe des deux pièces alignées 46 et 47 est prévue une goupille de centrage 55 insérée dans des trous axiaux 56 correspondants de ces pièces de connexion.

Le dispositif d'étanchéité comporte dans ce cas deux douilles 57 et 58 insérées respectivement dans les paires de canalisations alignées 48, 49 et 50, 51 et définissant chacune une seconde canalisation 58a et 58b. Chacune de ces douilles comprend à chacune de ses extrémités une lèvre annulaire 16 de même profil que la lèvre annulaire représentée sur la figure 2. Chaque douille 57, 58 est en outre pourvue d'une nervure annulaire 59 au moyen de laquelle elle est positionnée axialement, cette nervure étant prise entre les faces en regard des brides 52 lors du montage de l'ensemble.

L'entre-axe nominal des passages 48, 49 resp. 50, 51 des pièces de raccordement étant identique, il peut cependant subsister un défaut d'alignement dans cet ensemble en raison par exemple d'une différence de dilatation thermique entre les pièces ou d'inévitables tolérances de fabrication. Ces défauts sont facilement compensés et ne créent aucun problème d'étanchéité au niveau de la jonction, compte tenu du fait que grâce au dispositif selon l'invention, les lèvres 16 restent appliquées élastiquement contre les surfaces intérieures des passages tant que les tolérances restent dans des limites raisonnables pouvant facilement être respectées au cours de la fabrication des pièces.

## Revendications

1. Dispositif d'étanchéité pour assurer la jonction étanche entre deux canalisations (3 et 11, 13; 3B et 11, 13; 48 à 51 et 57a, 58a) destinées à véhiculer un fluide, notamment un écoulement de matière plastique, ce dispositif comprenant une première pièce (2; 2B ; 46, 47) de forme générale cylindrique et définissant au moins en partie la première canalisation (3; 3B; 48 à 51) et une seconde pièce (9; 9B, 23; 57, 58) également de forme générale cylindrique et définissant au moins en partie la seconde canalisation (11, 13; 57a, 58a), ladite seconde pièce (9; 23; 9B; 57, 58) étant insérée dans ladite première canalisation (3; 3B; 48 à 51), et comportant, à au moins l'une de ses extrémités, une lèvre métallique annulaire (16) dépassant de sa surface cylindrique extérieure, ladite lèvre (16) présentant une surface extérieure cylindrique (18) qui est en appui contre la surface intérieure de ladite première pièce (2; 2B; 46, 47) sous une précontrainte due aux tolérances dimensionnelles de ladite surface extérieure (18) de ladite lèvre (16) et de ladite surface intérieure de ladite première pièce cylindrique (2; 2B; 46, 47),
**caractérisé en ce que**
la lèvre annulaire (16) est raccordée à l'extrémité de la seconde pièce (9; 23, 9B; 57, 58) par une zone annulaire amincie (17) par rapport à la lèvre (16) et au corps de la seconde pièce (9; 23, 9B; 57, 58).

2. Dispositif d'étanchéité suivant la revendication 1, **caractérisé en ce que** la surface intérieure de ladite lèvre (16) est tronconique.

3. Dispositif d'étanchéité suivant la revendication 2, **caractérisé en ce que** la surface intérieure tronconique de ladite lèvre (16) se prolonge par une même surface tronconique prévue respectivement sur ladite zone de raccordement (17) et ladite seconde pièce cylindrique (9; 23, 9B).

4. Dispositif d'étanchéité suivant l'une quelconque des revendications 1 et 2, **caractérisé en ce que** ladite seconde canalisation (57a, 58a) est ménagée dans une douille (57, 58) insérée dans ladite première canalisation (48 à 51).

5. Dispositif d'étanchéité pour assurer la jonction étanche entre deux canalisations (44, 45 et 43a) destinées à véhiculer un fluide, notamment un écoulement de matière plastique d'un tuyau d'une section donnée à un tuyau de section égale ou plus faible, ce dispositif comprenant une première pièce (34, 35) de forme générale cylindrique et définissant au moins en partie la première canalisation (44, 45), et une seconde pièce (43) également de forme générale cylindrique et définissant au moins en partie la seconde canalisation (43a), ladite seconde pièce étant insérée dans ladite première canalisation (44, 45), **caractérisé en ce que** ladite seconde canalisation (43a) est ménagée dans une plaque à orifices (43) placés dans ladite première canalisation (44 ou 45), ladite plaque à orifices comportant deux lèvres annulaires (16) s'étendant respectivement axialement à partir de ses faces radiales, et appuyées contre les surfaces intérieures respectives des canalisations (44, 45) des pièces (34, 35).

6. Tête d'extrusion de matière plastique comportant un dispositif d'étanchéité suivant l'une quelconque des revendications 1 à 3, **caractérisée en ce que** ladite première canalisation (3; 3B) est ménagée dans le corps (2; 2B) de ladite tête (1, 1B) et **en ce que** ladite seconde canalisation est ménagée dans la filière de cette tête d'extrusion, ledit dispositif d'étanchéité étant prévu entre ledit corps et ladite filière.

7. Tête d'extrusion suivant la revendication 6, **caractérisée en ce qu'**elle comporte des moyens (8A, 20, 21; 33) pour décentrer l'orifice de la filière (9; 9A; 9B) par rapport à l'axe de ladite première canalisation (3; 3B), lesdits moyens de décentrage étant agencés pour déformer ladite zone de raccordement (17) entre ladite lèvre (16) et ladite filière.

## Patentansprüche

1. Dichtungsvorrichtung zur Sicherstellung einer dichten Verbindung zwischen zwei Rohrleitungen (3 und 11, 13; 3B und 11, 13; 48 bis 51 und 57a, 58a), die dazu bestimmt sind, ein Fluid, insbesondere eine Kunststoffströmung, zu transportieren, wobei diese Vorrichtung ein erstes Teil (2; 2B; 46, 47) mit allgemeiner zylindrischer Form, das wenigstens zum Teil die erste Rohrleitung (3; 3B; 48 bis 51) definiert, und ein zweites Teil (9; 9B, 23; 57, 58), das ebenfalls eine allgemeine zylindrische Form besitzt und wenigstens zum Teil die zweite Rohrleitung (11, 13; 57a, 58a) definiert, umfaßt, wobei das zweite Teil (9; 23, 9B; 57, 58) in die erste Rohrleitung (3; 3B; 48 bis 51) eingeschoben ist und an wenigstens einem seiner Enden eine ringförmige metallische Lippe (16) aufweist, die über ihre äußere zylindrische Fläche vorsteht und eine zylindrische äußere Oberfläche (18) aufweist, die sich an der inneren Oberfläche des ersten Teils (2; 2B; 46, 47) unter einer Vorspannung aufgrund der Abmessungstoleranzen der äußeren Oberfläche (18) der Lippe (16) und der inneren Oberfläche des ersten zylindrischen Teils (2; 2B; 46, 47) abstützt,

**dadurch gekennzeichnet, daß**

die ringförmige Lippe (16) mit dem Ende des zweiten Teils (9; 23, 9B; 57, 58) durch eine in bezug auf die Lippe (16) und den Körper des zweiten Teils (9; 23, 9B; 57, 58) eingeschnürte ringförmige Zone (17) verbunden ist.

2. Dichtungsvorrichtung nach Anspruch 1, **dadurch gekennzeichnet, daß** die innere Oberfläche der Lippe (16) kegelstumpfförmig ist.

3. Dichtungsvorrichtung nach Anspruch 2, **dadurch gekennzeichnet, daß** die kegelstumpfförmige innere Oberfläche der Lippe (16) durch dieselbe kegelstumpfförmige Oberfläche, die an der Verbindungszone (17) bzw. dem zweiten zylindrischen Teil (9; 23, 9B) vorgesehen ist, verlängert ist.

4. Dichtungsvorrichtung nach einem der Ansprüche 1 und 2, **dadurch gekennzeichnet, daß** die zweite Rohrleitung (57a, 58a) in einer Hülse (57, 58) ausgebildet ist, die in die erste Rohrleitung (48 bis 51) eingeschoben ist.

5. Dichtungsvorrichtung zur Sicherstellung einer dichten Verbindung zwischen zwei Rohrleitungen (44, 45 und 43a), die dazu bestimmt sind, ein Fluid, insbesondere eine Kunststoffströmung, von einem Rohr mit gegebenem Querschnitt zu einem Rohr mit gleichem oder kleinerem Querschnitt zu transportieren, wobei diese Vorrichtung ein erstes Teil (34, 35) mit im allgemeinen zylindrischer Form, das wenigstens zum Teil die erste Rohrleitung (44, 45) definiert, und ein zweites Teil (43), das ebenfalls eine im allgemeinen zylindrische Form besitzt und wenigstens zum Teil die zweite Rohrleitung (43a) definiert, umfaßt, wobei das zweite Teil in die erste Rohrleitung (44, 45) eingeschoben ist, **dadurch gekennzeichnet, daß** die zweite Rohrleitung (43a) in einer Platte mit Öffnungen (43) ausgebildet ist, die in der ersten Rohrleitung (44 oder 45) angeordnet sind, wobei die Platte mit Öffnungen zwei ringförmige Lippen (16) aufweist, die sich von ihren radialen Flächen jeweils axial erstrecken und sich an den jeweiligen inneren Oberflächen der Rohrleitungen (44, 45) der Teile (34, 35) abstützen.

6. Kunststoff-Extruderkopf, der eine Dichtungsvorrichtung nach einem der Ansprüche 1 bis 3 umfaßt, **dadurch gekennzeichnet, daß** die erste Rohrleitung (3; 3B) im Körper (2; 2B) des Kopfes (1, 1B) ausgebildet ist und die zweite Rohrleitung im Mundstück dieses Extruderkopfes ausgebildet ist, wobei die Dichtungsvorrichtung zwischen dem Körper und dem Mundstück vorgesehen ist.

7. Extruderkopf nach Anspruch 6, **dadurch gekennzeichnet, daß** er Mittel (8A, 20, 21; 33) umfaßt, um die Öffnung des Mundstücks (9; 9A; 9B) in bezug auf die Achse der ersten Rohrleitung (3; 3B) zu versetzen, wobei die Versetzungsmittel so beschaffen sind, daß sie die Verbindungszone (17) zwischen der Lippe (16) und dem Mundstück verformen.

**Claims**

1. Sealing device for assuring the sealed junction between two ducts (3 and 11, 13; 3B and 11, 13; 48 to 51 and 57a, 58a) intended to convey a fluid, in particular a flow of plastic material, this device comprising a first part (2; 2B; 46, 47) of generally cylindrical shape and defining at least in part the first duct (3; 3B; 48 to 51) and a second part (9; 9B, 23; 57, 58) also of generally cylindrical shape defining at least in part the second duct (11, 13; 57a, 58a), said second part (9, 23, 9B; 57, 58) being inserted in said first duct (3; 3B; 48 to 51), and comprising, at least at one of its ends, a metal annular lip (16) protruding from its external cylindrical surface, said lip (16) having an external cylindrical surface (18) which abuts the internal surface of said first part (2; 2B; 46, 47) under a mechanical bias due to the dimensional tolerances of said external surface (18) of said lip (16) and of said internal surface of said first cylindrical part (2; 2B; 46, 47),

**characterized in that**

the annular lip (16) is connected to the end of the second part (9, 23, 9B; 57, 58) by an annular zone (17) thinned in relation to the lip (16) and to the body of the second part (9, 23, 9B; 57, 58)

2. Sealing device according to claim 1, **characterized in that** the internal surface of said lip (16) is truncated.

3. Sealing device according to claim 2, **characterized in that** the truncated internal surface of said lip (16) extends via a same truncated surface provided respectively on said connecting zone (17) and said second cylindrical part (9; 23, 9B).

4. Sealing device according to any one of claims 1 or 2, **characterized in that** said second duct (57a, 58a) is arranged in a sleeve (57, 58) inserted in said first duct (48 to 51).

**5.** Sealing device for assuring the sealed junction between two ducts (44, 45 and 43a) intended to convey a fluid, in particular a flow of plastic material from a pipe having a given section to a pipe having an equal or lower section, this device comprising a first part (34, 35) of generally cylindrical shape and defining at least in part the first duct (44, 45), and a second part (43) also of generally cylindrical shape and defining at least in part the second duct (43a), said second part being inserted in said first duct (44, 45), **characterized in that** said second duct (43a) is arranged in a plate with openings (43) placed in said first duct (44 or 45), said plate with openings comprising two annular lips (16) protruding respectively axially from its radial faces, and abutting against the respective inner surfaces of the ducts (44, 45) of the parts (34, 35).

**6.** Extrusion head for extruding plastic material comprising a sealing device according to any one of claims 1 to 3, **characterized in that** said first duct (3; 3B) is arranged in the body (2, 2B) of said head (1, 1B) and **in that** said second duct is arranged in the die of this extrusion head, said sealing device being provided between said body and said die.

**7.** Extrusion head according to claim 6, **characterized in that** it comprises means (8A, 20, 21; 33) for decentering the opening of the die (9; 9A; 9B) in relation to the axis of said first duct (3; 3B), said decentering means being arranged for deforming said connecting zone (17) between said lip (16) and said die.

# Fig.1

# Fig . 2

Fig . 3

Fig . 4

Fig .5

Fig . 6